# EUROPÄISCHE PATENTSCHRIFT

(11) **EP 3 463 744 B1**
(45) Veröffentlichungstag und Bekanntmachung des Hinweises auf die Patenterteilung: **08.07.2020**
(21) Anmeldenummer: 17727160.8
(22) Anmeldetag: 23.05.2017
(51) Int. Cl.: B23K 37/00, B23K 26/12, B23K 26/14, F16P 1/06, B23K 26/70, B29C 64/20, B23Q 3/155

(54) **LASERBEARBEITUNGSMASCHINE MIT EINEM DÜSENWECHSLER UND EINER SCHUTZUMHAUSUNG**
LASER PROCESSING MACHINE HAVING A NOZZLE CHANGER AND A PROTECTIVE ENCLOSURE
MACHINE D'USINAGE LASER AVEC UN CHANGEUR DE BUSES ET UNE ENCEINTE DE PROTECTION

(30) Priorität: 30.05.2016 DE 102016209285
(43) Veröffentlichungstag der Anmeldung: 10.04.2019
(73) Patentinhaber: TRUMPF Schweiz AG, 7214 Grüsch (CH); Trumpf Werkzeugmaschinen GmbH + Co. KG, 71254 Ditzingen (DE)
(72) Erfinder: BUNZ, Andreas, 70771 Leinfelden-Echterdingen (DE); NIEDING, Philipp, 70469 Stuttgart (DE); RUDOW, Julian, 6300 Zug (CH); SCHNYDER, Simon, 8645 Jona (CH); BUEHLER, Andreas, 8051 Zuerich (CH)
(74) Vertreter: Kohler Schmid Möbus Patentanwälte
(86) Internationale Anmeldenummer: PCT/EP2017/062439
(87) Internationale Veröffentlichungsnummer: WO 2017/207359

(56) Entgegenhaltungen:
- EP-B1- 2 589 458
- DE-A1-102013 224 649
- US-A- 5 376 062
- US-A1- 2005 263 510

## Beschreibung

Die vorliegende Erfindung betrifft eine Laserbearbeitungsmaschine, zum Bearbeiten eines Werkstücks mittels Laserstrahls, umfassend: einen Düsenwechsler zur Montage und/oder Demontage von Düsen an einem Bearbeitungskopf der Laserbearbeitungsmaschine, wobei der Düsenwechsler eine Mehrzahl von Düsenaufnahmen zur Aufnahme von Düsen aufweist.

Ein Düsenwechsler für eine Laserbearbeitungsmaschine ist aus der EP 2 589 458 B1 (Basis für den Oberbegriff des Anspruchs 1) bekannt geworden. Der Düsenwechsler weist eine Mehrzahl von Düsenaufnahmen auf, die in einer gemeinsamen Lagereinrichtung angeordnet sind. Eine jeweilige Düsenaufnahme dient zur Montage und/oder zur Demontage einer Düse an dem Bearbeitungskopf der Laserbearbeitungsmaschine.

Laserdüsen, die zur Durchführung eines Bearbeitungsprozesses an einem Laserbearbeitungskopf einer Laserbearbeitungsanlage angebracht werden, oder Brennerdüsen, die an einem Brennerkopf einer Plasmabearbeitungsmaschine angebracht werden, können durch Kollisionen mit Werkstückteilen, Spritzern und Verschmutzungen aus dem Bearbeitungsprozess verunreinigt oder beschädigt werden. Bei derartigen Düsen handelt es sich somit um Verschleißsteile, die aus Gründen der Prozesssicherheit regelmäßig gewechselt werden sollten. Ein Wechsel der Düsen ist auch erforderlich, wenn für unterschiedliche Schneidprozesse verschiedene Düsentypen eingesetzt werden sollen.

Aus DE 195 46 677 A1 ist eine Brennschneidmaschine bekannt geworden, die eine mit einer Abdeckung versehene Werkzeugteileaufnahme mit mehreren Werkzeugteilaufnahmestationen aufweist, die derart ausgebildet ist, dass sie zur vertikal verschiebbaren, einsteckbaren und entnehmbaren Lagerung einer Gruppe von austauschbaren Werkzeugteilen geeignet ist, bei denen es sich um Düsen handeln kann. Die Werkzeugteileaufnahme kann ein schubladenförmiges Bauteil aufweisen, das mittels einer Linear-Verstelleinrichtung gesteuert aus der Abdeckung herausgefahren werden kann, um ein jeweiliges Werkzeugteil an einem Werkzeug, beispielsweise an einem Brennerkopf, auszuwechseln.

Aus der EP 1 602 439 B1 ist ein Düsenmagazin innerhalb einer Schutzumhausung einer Laserbearbeitungsmaschine bekannt, das an einer Position zum automatischen Werkzeugwechsel angeordnet ist, wobei eine staubdichte Abdeckung das Düsenaustauschmagazin von oben abdeckt und sich nur dann öffnet, wenn eine Düse eines Laserbearbeitungswerkzeugs gewechselt wird.

In der JP 2014 172 046 A ist eine Laserbearbeitungsmaschine beschrieben, bei der eine Düsenhalteeinrichtung an einem Ende eines Schlittens angebracht ist, der zum Klemmen eines freien Endes eines zu bearbeitenden Werkstücks ausgebildet ist. Die Düsenhalteeinrichtung weist eine öffenbare und schließbare Abdeckung auf, welche die Oberseite einer Mehrzahl von in der Düsenhalteeinrichtung aufgenommenen Düsen abdeckt.

Aus der US 2008053976 A1 ist ein außerhalb einer Schutzumhausung einer Laserbearbeitungsmaschine angeordnetes Schneidkopf-Magazin bekannt, in dem eine Mehrzahl von Schneidköpfen entlang einer Kette gelagert wird. Eine Schneidkopf-Wechseleinheit übernimmt einen Schneidkopf von einer Übergabeposition des Schneidkopf-Magazins und wechselt den an einem Bearbeitungskopf befestigten Schneidkopf gegen den aus dem Schneidkopf-Magazin entnommenen Schneidkopf aus.

### Aufgabe der Erfindung

Der Erfindung liegt die Aufgabe zugrunde, eine Laserbearbeitungsmaschine bereitzustellen, bei der die Zugänglichkeit des Düsenwechslers verbessert wird.

### Gegenstand der Erfindung

Eine Laserbearbeitungsmaschine zum Bearbeiten eines Werkstückes mittels eines Laserstrahles gemäß der Erfindung ist im Anspruch 1 definiert.

Die Schutzumhausung dient zur Abgrenzung bzw. zur Abschirmung des Arbeitsraums von dem Umgebungsraum und stellt beispielsweise sicher, dass während der Bearbeitung des Werkstücks innerhalb des Arbeitsraums mittels des Laserstrahles keine hochenergetische Strahlung in den Umgebungsraum gelangt bzw. nur so wenig Strahlung, dass die vorgeschriebenen Strahlungsgrenzwerte eingehalten werden, so dass ein Bediener sich während der Bearbeitung gefahrlos außerhalb der Schutzumhausung bewegen kann.

Durch die Bewegung des Düsenwechslers an die Rüstposition außerhalb der Schutzumhausung, die typsicher Weise für einen Bediener zugänglich ist, kann ein manuelles oder ein beispielsweise mittels eines Roboters automatisiertes Vorrüsten des Düsenwechslers, genauer gesagt das manuelle oder automatisierte Bestücken von Düsenaufnahmen des Düsenwechslers mit Düsen, die eine für eine nachfolgende Werkstückbearbeitung geeignete Bauart aufweisen, und/oder der Austausch von bei der Bearbeitung beschädigten Düsen gegen neue Düsen erfolgen, während in der Maschine die Werkstückbearbeitung oder andere Prozesse, beispielsweise das Be- und Entladen von Werkstücken, stattfinden. Das Rüsten kann also zeitparallel zu allen Betriebszuständen der Bearbeitungsmaschine erfolgen, in denen kein Düsenwechsel stattfindet.

Für den Düsenwechsel, der typischer Weise zwischen zwei aufeinander folgenden Bearbeitungen erfolgt, wird der Düsenwechsler an die Düsenwechselposition innerhalb der Schutzumhausung bewegt. Zur Bewegung des Düsenwechslers zwischen der Düsenwechselposition und der Rüstposition weist die Schutzumhausung eine Öffnung auf. Die Düsenwechselposition ist typischer Weise so gewählt, dass der Bearbeitungskopf mit Hilfe seiner Bewegungsachsen an die Düsenwechselposition bewegt werden kann, um an einer jeweiligen Düsenaufnahme einen Düsenwechsel durchzuführen. Die Düsenwechselposition befindet sich daher in der Regel benachbart zu einem Bearbeitungsbereich für die Bearbeitung des Werkstücks. Der Düsenwechsel kann beispielsweise auf die in der eingangs zitierten EP 2 589 458 B1 beschriebene Weise erfolgen, d.h. der Bearbeitungskopf nähert sich für den Düsenwechsel den Düsenaufnahmen von oben. Der Düsenwechsler kann beispielsweise wie in der EP 2 589 458 B1 beschrieben ausgebildet sein, welche durch Bezugnahme zum Inhalt dieser Anmeldung gemacht wird.

Bei einer Ausführungsform ist der Düsenwechsler in der Schutzumhausung zwischen der Düsenwechselposition und einer Ruheposition bewegbar, aus welcher der Düsenwechsler in die Rüstposition außerhalb der Schutzumhausung bewegbar ist. Der Düsenwechsler wird typischer Weise durch eine automatisch gesteuerte Bewegung, d.h. mittels eines Antriebs, von der Ruheposition in die Düsenwechselposition und umgekehrt bewegt. Der Düsenwechsler kann zu diesem Zweck beispielsweise linear verschoben oder ggf. entlang eines Hebelarms verschwenkt werden. An der Düsenwechselposition ist der Düsenwechsler typischer Weise nach oben hin offen, um den Düsenwechsel mit Hilfe des Bearbeitungskopfs vornehmen zu können. Der Bearbeitungskopf wird mit Hilfe der Maschinenachsen über den an der Düsenwechselposition angeordneten Düsenwechsler verfahren, so dass eine an dem Bearbeitungskopf angebrachte Düse gewechselt werden kann. Die Ruheposition ist typischer Weise weiter vom Bearbeitungsbereich entfernt als die Düsenwechselposition. Der Düsenwechsler kann in die Ruheposition bewegt werden, um zu verhindern, dass es beim Bearbeitungsprozess zur Verschmutzung des Düsenwechslers kommt.

Bei einer Weiterbildung ist der Düsenwechsler aus der Ruheposition manuell (durch Ziehen oder Schieben) in die Rüstposition bewegbar (und umgekehrt). In diesem Fall kann der Düsenwechsler bei Bedarf von einem Bediener (oder Roboter) von der Ruheposition in die Rüstposition bewegt werden. Dies ist nur möglich, wenn der Düsenwechsler in der Ruheposition angeordnet ist. Der manuelle Zugriff auf den Düsenwechsler durch einen Bediener, d.h. die manuelle Bewegung in die Rüstposition kann durch eine Verriegelung gesperrt werden, wenn der Düsenwechsler in der Düsenwechselposition angeordnet ist oder wenn der Düsenwechsler zwischen der Düsenwechselposition und der Ruheposition bewegt wird.

Bei einer Weiterbildung weist die Laserbearbeitungsmaschine ein (ortsfestes) Gehäuse zur Abdeckung der Mehrzahl von Düsenaufnahmen des Düsenwechslers in der Ruheposition auf. Durch das Gehäuse kann der Düsenwechsler vor bei der Werkstückbearbeitung auftretender Verschmutzung geschützt werden. Das Gehäuse weist typischer Weise einen Gehäusedeckel auf, welcher die Mehrzahl von Düsenaufnahmen an der Oberseite des Düsenwechslers abdeckt. Vorzugsweise wird eine Seitenwand des Gehäuses durch ein mit dem Düsenwechsler verbundenes Abschirmelement verschlossen, wenn der Düsenwechsler in der Ruheposition im Gehäuse angeordnet ist.

Bei einer weiteren Weiterbildung ist der Düsenwechsler in der Ruheposition und in der Rüstposition in einem ersten schubladenförmigen Bauteil angeordnet bzw. aufgenommen. Vorzugsweise ist der Düsenwechsler in der Düsenwechselposition in einem anderen, zweiten schubladenförmigen Bauteil aufgenommen, wobei das zweite schubladenförmige Bauteil in der Ruheposition in dem ersten schubladenförmigen Bauteil aufgenommen und insbesondere gemeinsam mit dem ersten schubladenförmigen Bauteil in die Rüstposition bewegbar ist, oder umgekehrt. In der Rüstposition befindet sich das erste schubladenförmige Bauteil in einer aus der Schutzumhausung ausgezogenen Stellung, so dass der Düsenwechsler durch den Bediener (oder einen Roboter) bestückt werden kann. In diesem Fall ist der Düsenwechsler mittels der Frontfläche des ersten schubladenförmigen Bauteils in die (bestehende) Verkleidung bzw. Schutzumhausung der Laserbearbeitungsmaschine integriert und es kann ein manuelles Herausziehen des Düsenwechslers in die aus der Schutzumhausung ausgezogene Stellung (in der Art einer Schublade) erfolgen. Wenn das zweite schubladenförmige Bauteil in der Ruheposition innerhalb des ersten schubladenförmigen Bauteils angeordnet ist, so wird bei der Bewegung des Düsenwechslers in die Rüstposition typischer Weise eine dem Arbeitsraum der Laserbearbeitungsmaschine zugewandte Frontfläche des zweiten schubladenförmigen Bauteils nicht mitbewegt, so dass die dem Arbeitsraum zugewandte Öffnung des Gehäuses durch diese Frontfläche verschlossen ist. Bei der Bewegung des Düsenwechslers von der Ruheposition in die Düsenwechselposition wird das erste schubladenartige Bauteil typischer Weise nicht mit bewegt, so dass die Öffnung in der Schutzumhausung durch die der Arbeitsraumumgebung zugewandte Frontfläche des ersten schubladenförmigen Bauteils verschlossen bleibt. Auf diese Weise ist der Strahlschutz durch die Schutzumhausung bzw. das verschlossene Gehäuse immer gewährleistet. Es versteht sich, dass die Anordnung der beiden schubladenförmigen Bauteile ineinander auch in umgekehrter Weise erfolgen kann.

Bei einer weiteren Ausführungsform umfasst die Laserbearbeitungsmaschine zusätzlich ein an der der Arbeitsraumumgebung zugewandten Seite der Schutzumhausung befestigtes Verkleidungsbauteil und/oder eine Abdeckung, welches bzw. welche zwischen einer ersten Stellung und einer zweiten Stellung bewegbar ist, wobei in der ersten Stellung das Verkleidungsbauteil und/oder die Abdeckung die Rüstposition von der Arbeitsraumumgebung trennt und in der zweiten Stellung die Rüstposition von der Arbeitsraumumgebung her zugänglich ist.

Das Verkleidungsbauteil kann beispielsweise über ein Gelenk an dem Schutzgehäuse befestigt sein und manuell zwischen der ersten, geschlossenen Stellung, in der das Verkleidungsbauteil die Rüstposition, genauer gesagt einen von dem Verkleidungsbauteil umgebenen oder verschlossenen Raum, der beispielsweise einen Innenraum eines schrankartigen Teils der Schutzumhausung bildet, von der Arbeitsraumumgebung trennt, und der zweiten, geöffneten Stellung, in der die Rüstposition für einen Bediener zugänglich ist, in der Art einer Schranktüre verschwenkt werden. In diesem Fall ist der Düsenwechsler bzw. das schubladenförmige Bauteil mit darin aufgenommenem Düsenwechsler in der Rüstposition in dem schrankartigen Maschinenteil der Schutzumhausung aufgenommen, beispielsweise einem dort befindlichen Kasten. Das Verkleidungsbauteil wirkt typischer Weise selbst nicht als Abschirmung für die Streustrahlung aus dem Arbeitsbereich und kann beispielsweise eines oder mehrere Sichtfenster aufweisen. An Stelle eines verschwenkbaren Verkleidungsbauteils kann beispielsweise auch ein verschiebbares Verkleidungsbauteil in der Art einer Schiebetüre verwendet werden.

In der Rüstposition ist der Düsenwechsler innerhalb des Verkleidungsbauteils (im "Schrank") an der dem Umgebungsraum zugewandten Seite der Schutzumhausung aufgenommen, so dass der Bearbeitungsprozess keinen Einfluss auf den Düsenwechsler hat. Der Düsenwechsler kann während der Hauptzeit, d.h. während des Bearbeitungsbetriebs, z.B. während des Laserschneidens, durch Öffnen der Schranktüre bestückt werden. Für den Düsenwechsel fährt der Düsenwechsler in diesem Fall typischer Weise automatisch gesteuert durch die Schutzumhausung nach innen in den Arbeitsraum.

Alternativ oder zusätzlich zu dem Verkleidungsbauteil kann die Laserbearbeitungsmaschine eine Abdeckung aufweisen, die ebenfalls zwischen einer ersten Stellung und einer zweiten Stellung bewegbar ist, um die Rüstposition in der geschlossenen Stellung von der Arbeitsraumumgebung zu trennen bzw. in der geöffneten Stellung mit der Arbeitsraumumgebung zu verbinden. Weist die Laserbearbeitungsmaschine das weiter oben beschriebene Verkleidungsbauteil auf, ist die Abdeckung typischer Weise in dem von dem Verkleidungsbauteil umschlossenen Raum angeordnet. Die Abdeckung dient in diesem Fall typischer Weise dazu, eine Öffnung in dem schrankartigen Maschinenteil zu überdecken, beispielsweise eine Öffnung in einem dort vorgesehenen Kasten, durch die auf die an der Oberseite des Düsenwechslers angeordneten Düsenaufnahmen zugegriffen werden kann.

In der ersten, geschlossenen Stellung dient die Abdeckung zum Abdecken der Öffnung und damit zum Schutz der im Düsenwechsler angeordneten Düsen vor Verschmutzung. Außerdem kann die Abdeckung dazu dienen, einen Eingriff des Benutzers während der Verfahrbewegung des Düsenwechslers und dadurch beispielsweise das Einklemmen einer Hand zu verhindern. Die Abdeckung kann den Grundkörper, an dessen Oberseite die Düsenaufnahmen des Düsenwechslers gelagert sind, in der ersten Stellung beispielsweise von oben überdecken. Die Abdeckung kann beispielsweise in der Art eines Schiebers oder einer Klappe ausgebildet sein, die in einer Schwenkbewegung oder in einer linearen Bewegung von der ersten in die zweite Stellung und umgekehrt bewegt werden kann. Die Abdeckung muss nur zum Bestücken des Düsenwechslers mit den Düsen manuell geöffnet werden und kann ansonsten in der geschlossenen Stellung verbleiben.

Bei einer Weiterbildung umfasst die Laserbearbeitungsmaschine eine Sensoreinrichtung zur Erkennung der ersten und/oder der zweiten Stellung des Verkleidungsbauteils und/oder der Abdeckung. Die Sensoreinrichtung kann beispielsweise durch einen Sicherheitsschalter (Kontaktschalter) gebildet sein, welcher zur Erkennung des Zustands "geschlossen", d.h. zur Erkennung der ersten, geschlossenen Stellung ausgebildet ist. Gegebenenfalls kann die Sensoreinrichtung auch ausgebildet sein, den zweiten Zustand bzw. den Übergang von der ersten in die zweite Stellung zu erkennen, beispielsweise wenn diese in der Art eines optischen Sensors, beispielsweise einer Lichtschranke ausgebildet ist, welche eine Bewegung aus der ersten Stellung heraus detektiert.

Bei einer weiteren Weiterbildung ist die Laserbearbeitungsmaschine, genauer gesagt eine Steuerungseinrichtung der Laserbearbeitungsmaschine, ausgebildet, die (automatisierte) Bewegung des Düsenwechslers von der Düsenwechselposition in die Rüstposition und umgekehrt zu verhindern, wenn das Verkleidungsbauteil und/oder die Abdeckung sich in der zweiten (geöffneten) Stellung befinden. Zu diesem Zweck kann die Steuerungseinrichtung mit der Sensoreinrichtung in Verbindung stehen und auf einen für die Bewegung des Düsenwechslers verwendeten Antrieb einwirken, sofern das Verlassen der ersten Stellung erkannt wird. Falls der Düsenwechsler beim Verlassen der ersten Stellung zwischen der Rüstposition und der Düsenwechselposition bewegt wird, kann diese Bewegung gegebenenfalls gestoppt werden. Auf diese Weise kann verhindert werden, dass ein Bediener beim Versuch des manuellen Zugriffs auf den Düsenwechsler sich verletzt, beispielsweise weil er sich die Finger zwischen einem Bauteil der Schutzumhausung und dem sich bewegenden Düsenwechsler einklemmt.

Bei einer weiteren Weiterbildung weist die Laserbearbeitungsmaschine eine Verriegelungseinrichtung zur Verriegelung des Verkleidungsbauteils und/oder der Abdeckung in der ersten, geschlossenen Stellung auf, wenn der Düsenwechsler nicht in der Rüstposition angeordnet ist. Die Verriegelungseinrichtung kann beispielsweise einen mechanischen Riegel aufweisen, der das Verkleidungsbauteil und/oder die Abdeckung in der ersten Stellung verriegelt, sofern sich der Düsenwechsler nicht in der Rüstposition befindet. Nur für den Fall, dass der Düsenwechsler sich an der Rüstposition befindet, wird die Verriegelung gelöst und das Verkleidungsbauteil bzw. die Abdeckung kann in die zweite Stellung bewegt werden.

Bei einer weiteren Ausführungsform umfasst die Laserbearbeitungsmaschine zusätzlich ein Düsenmagazin zur Ablage von Düsen, welches benachbart zum in der Rüstposition befindlichen Düsenwechsler angeordnet ist. Das Düsenmagazin dient zur Lagerung von momentan nicht für die Werkstückbearbeitung benötigten Düsen, auf die ein Bediener beim Vorrüsten des Düsenwechslers zugreifen kann. Das Düsenmagazin kann schräg zur Horizontalen ausgerichtet sein, um die Wahrscheinlichkeit zu reduzieren, dass Staub von oben in die Düsenaufnahmen bzw. in die in dem Düsenmagazin abgelegten Düsen fällt. Das Düsenmagazin kann beispielsweise in dem schrankartigen Maschinenteil der Schutzumhausung in einem gemeinsamen Einsatz bzw. Kasten hinter dem Verkleidungsbauteil bzw. der Schranktüre angeordnet sein, es ist aber auch möglich, dass das Düsenmagazin entweder gemeinsam mit dem Düsenwechsler oder separat in einem schubladenförmigen Bauteil angeordnet wird, welches aus der Schutzumhausung ausziehbar ist.

Bei einer weiteren Ausführungsform weist der Düsenwechsler mindestens ein Abschirmelement zur Verhinderung des Austritts von Strahlung aus dem Arbeitsraum in die Arbeitsraumumgebung auf oder der Düsenwechsler ist lösbar mit dem Abschirmelement verbunden. Wie weiter oben beschrieben wurde, ist in der Schutzumhausung eine Öffnung angebracht, um den Düsenwechsler von der Düsenwechselposition in die Rüstposition und umgekehrt zu bewegen. Der Düsenwechsler stellt daher einen Bestandteil des Strahlschutz- und Sicherheitskonzeptes der Laserbearbeitungsmaschine dar, denn es muss sichergestellt sein, dass bei in der Rüstposition angeordnetem Düsenwechsler bei geöffnetem schubladenartigem Bauteil bzw. schrankartigem Maschinenteil nicht in zu hohem Umfang Strahlung aus dem Arbeitsraum der Laserbearbeitungsmaschine austreten kann. Sofern eine Ruheposition für den Düsenwechsler vorgesehen ist, muss auch sichergestellt werden, dass bei in der Ruheposition angeordnetem Düsenwechsler maximal eine die zugelassenen Grenzwerte nicht überschreitende Strahlung aus dem Arbeitsraum austreten kann.

Dies kann beispielsweise durch ein Abschirmelement z.B. in der Art eines Abschirm- bzw. Strahlenschutzblechs sichergestellt werden, welches an einer Stirnseite des Düsenwechslers quer zur Bewegungsrichtung des Düsenwechslers angebracht ist, entlang derer der Düsenwechlser linear bewegt wird. Das (seitliche) Abschirmelement am Düsenwechsler ist so groß ausgebildet, dass Streustrahlung vom Prozessort nicht in unzulässiger Weise aus dem von der Schutzumhausung abgegrenzten Arbeitsraum heraus gelangt. Zu diesem Zweck kann beispielsweise der Strahlweg der Streustrahlung zwischen dem Prozessort und der Öffnung in der Schutzumhausung ganz oder größtenteils von dem Abschirmelement verdeckt bzw. unterbrochen werden, und zwar in jeder Position des Düsenwechslers, bei der die Schutzumhausung geöffnet ist.

Ist an der Ruheposition des Düsenwechslers ein Gehäuse angeordnet, so kann der Düsenwechsler einerseits aus dem Gehäuse bzw. der Ruheposition automatisiert in die Düsenwechselposition und somit in den Arbeitsraum hinein bewegt werden und andererseits kann der Düsenwechsler manuell nach außen aus dem Gehäuse in die Arbeitsraumumgebung gezogen werden. Das Abschirmelement des Düsenwechslers ist so dimensioniert, dass in der Ruheposition und in der Rüstposition das Gehäuse durch das Abschirmelement des Düsenwechslers zumindest so weit geschlossen wird, dass der Strahlschutz gewährleistet ist. Bei der Bewegung des Düsenwechslers von der Ruheposition in die Rüstposition kann in diesem Fall das Abschirmelement vom Düsenwechsler getrennt werden, um die Öffnung in dem Gehäuse zu verschließen. Bei der Bewegung des Düsenwechslers von der Ruheposition in die Düsenwechselposition ist das Abschirmelement typischer Weise mit dem Düsenwechsler bewegungsgekoppelt, d.h. das Abschirmelement wird gemeinsam mit dem Düsenwechsler bewegt. Bei dem Abschirmelement kann es sich insbesondere um eine Frontfläche bzw. Frontseite des weiter oben beschriebenen zweiten schubladenförmigen Bauteils handeln.

Bei einer weiteren Ausführungsform umfasst die Laserbearbeitungsmaschine zusätzlich einen Antrieb zur Bewegung des Düsenwechslers aus der Düsenwechselposition in die Ruheposition oder aus der Düsenwechselposition in die Rüstposition, und umgekehrt. Bei der Bewegung des Düsenwechslers zwischen den jeweiligen Positionen handelt es sich typischer Weise um eine Linearbewegung. Für die Ansteuerung des Antriebs kann die weiter oben beschriebene Steuerungseinrichtung verwendet werden. Als Antrieb für die automatisch gesteuerte Bewegung des Düsenwechslers kann beispielsweise mindestens ein Pneumatikzylinder dienen. Dieser ist typischer Weise nur zwischen zwei Endstellungen gesteuert bewegbar, die einer festen Düsenwechselposition und einer festen Ruheposition bzw. einer festen Düsenwechselposition und einer festen Rüstposition entsprechen. Alternativ kann eine numerisch gesteuerte Achse (NC-Achse) bzw. ein Linearantrieb zur Positionierung des Düsenwechslers verwendet werden. In diesem Fall sind zwischen der Düsenwechselposition und der Ruheposition bzw. der Übergabeposition beliebige Zwischenpositionen erreichbar, so dass der Bearbeitungskopf ggf. nicht jede der Düsenaufnahmen des Düsenwechslers einzeln anfahren muss, da durch die gesteuerte Bewegung des Düsenwechslers die Lage der Düsenwechselposition in dem Arbeitsraum geeignet angepasst werden kann.

Bei einer weiteren Ausführungsform umfasst die Laserbearbeitungsmaschine zusätzlich ein ortsfest in dem Arbeitsraum oder an dem bzw. an einem Abschirmelement angeordnetes Bürstenelement zur Reinigung einer an dem Bearbeitungskopf montierten Düse, bei in der Ruheposition oder in der Rüstposition angeordnetem Düsenwechsler. Mit Hilfe des ortsfest angeordneten Bürstenelements ist eine Düsenreinigung ohne eine aktive Verfahrbewegung des Düsenwechslers dauerhaft möglich, wodurch die Produktivität gesteigert wird. Beim Bürsten von verschmutzten Düsen platzen anhaftende Schlacke und Staub ab, die bzw. der sich in alle Richtungen ausbreitet. Um den Düsenwechsler vor einer Verschmutzung zu schützen, wird dieser typischer Weise vor der Reinigung einer Düse mit Hilfe des Bürstenelements von der Düsenwechselposition in die Rüstposition oder in die Ruheposition bewegt. Ist in der Ruheposition ein Gehäuse angeordnet, kann das Bürstenelement auch an dem Düsenwechsler oder ggf. an einem lösbar mit dem Düsenwechsler verbundenen Abschirmelement angebracht und mit diesem mitbewegt werden, da dieser bei der Reinigung durch das Gehäuse vor Verschmutzung geschützt ist. Dadurch, dass der Düsenwechsler beim Bürsten nicht in unmittelbarer Nähe des Bürstenelements angeordnet bzw. in dem Gehäuse angeordnet ist, ist dieser mitsamt der für die Bewegung benötigten Mechanik geschützt. Dies ist insbesondere für schmutzempfindliche

Düseninspektionskomponenten sowie die einzelnen Düsenaufnahmen günstig. Auch eine ggf. vorhandene Kalibrierplatte, die an dem Düsenwechlser angebracht ist, bleibt auf diese Weise sauber und kann ein langes Reinigungs- bzw. Wartungsintervall aufweisen.

Bei einer weiteren Ausführungsform weist die Laserbearbeitungsmaschine einen Drehantrieb zum Erzeugen einer Drehbewegung mindestens einer Düsenaufnahme zur Montage und/oder Demontage einer in der Düsenaufnahme aufgenommenen Düse an dem Bearbeitungskopf in der Düsenwechselposition des Düsenwechslers auf. Wie in der eingangs zitierten EP 2 589 458 B1 beschrieben ist, können die Düsen mit Hilfe einer Drehbewegung an dem Bearbeitungskopf angeschraubt bzw. abgeschraubt werden. Der Antrieb kann beispielsweise als Motor ausgebildet sein, der über einen Zahnriemen oder über Zahnräder mit einer Zahnscheibe der jeweiligen Düsenaufnahme gekoppelt ist. Für Düsen, die an dem Bearbeitungskopf über eine Steckverbindung befestigt werden, kann auf einen (Dreh-)antrieb verzichtet werden.

Der Düsenwechsler kann bei der Montage in der Laserbearbeitungsmaschine vorausgerichtet werden. Bei Einbau in die Laserbearbeitungsmaschine kann durch Zylinderstifte und bearbeitete Flächen die korrekte Position sichergestellt werden, ohne dass ein zusätzliches Ausrichten oder Justieren erforderlich ist.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Laserbearbeitungsmaschine mit einer Schutzumhausung in der Art einer Laserschutzkabine,
- Fig. 2a,b: Darstellungen eines Düsenwechslers an einer Düsenwechselposition in einem Arbeitsraum innerhalb der Schutzumhausung von Fig. 1 und in einer Rüstposition außerhalb der Schutzumhausung,
- Fig. 3: eine Darstellung des Düsenwechslers von Fig. 2a,b in der Düsenwechselposition bei der Demontage einer an einem Bearbeitungskopf montierten Düse,
- Fig. 4a-c: Darstellungen eines Düsenwechslers in einer Düsenwechselposition und einer Ruheposition innerhalb der Schutzumhausung sowie in einer Rüstposition außerhalb der Schutzumhausung, sowie
- Fig. 5a-c: schematische Darstellungen des Düsenwechslers analog zu Fig. 4a-c mit einem ersten und zweiten schubladenförmigen Bauteil.

In der folgenden Beschreibung der Zeichnungen werden für gleiche bzw. funktionsgleiche Bauteile identische Bezugszeichen verwendet.

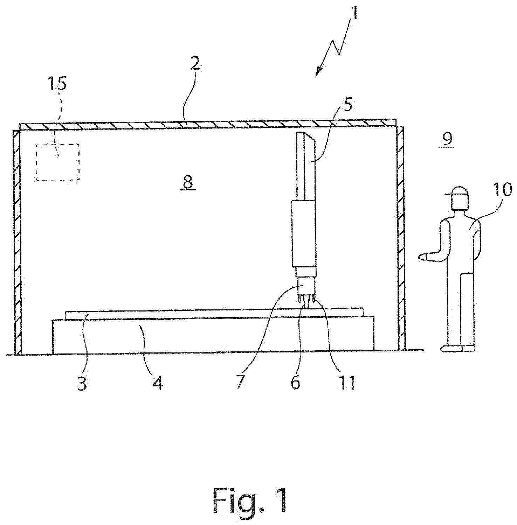

**Fig. 1** zeigt schematisch und vereinfacht einen beispielhaften Aufbau einer Laserbearbeitungsmaschine 1, welche eine Schutzumhausung 2 in Form einer Laserschutzkabine aufweist. Die Laserbearbeitungsmaschine 1 dient zur Laserbearbeitung, beispielsweise zum Laserschneiden, eines Werkstücks 3, welches auf einer Werkstückauflage 4 gelagert ist. Die Laserbearbeitungsmaschine 1 umfasst eine Bewegungseinrichtung 5 zur Bewegung eines Laserbearbeitungskopfes 7, welcher zur schneidenden Bearbeitung einen Laserstrahl 6 auf das Werkstück 3 ausrichtet. Die Schutzumhausung 2 grenzt einen innerhalb der Schutzumhausung 2 gebildeten Arbeitsraum 8 von einer Arbeitsraumumgebung 9 ab, die sich außerhalb der Schutzumhausung 2 befindet. Die Schutzumhausung 2 weist lasersichere Wände auf, um zu verhindern, dass Streustrahlung, die bei der Bearbeitung des Werkstücks 3 mit dem Laserstrahl 6 entsteht, in die Arbeitsraumumgebung 9 gelangt. Eine Abschirmung der Arbeitsraumumgebung 9 ist aus Gründen des Arbeitsschutzes erforderlich, um zu verhindern, dass ein Bediener 10 durch die beim Bearbeiten entstehende Streustrahlung geschädigt wird.

Für die Bearbeitung des Werkstücks 3 mit dem Laserstrahl 6 weist der Laserbearbeitungskopf 7 eine Düse 11 auf, durch die ein Schneidgasstrom auf das Werkstück 3 strömt. Bei der Düse 11 handelt es sich um ein Verschleißteil, das bei der Bearbeitung des Werkstücks 3 z.B. durch Schlacke beschädigt werden kann, so dass die Düse 11 ggf. gegen eine neue Düse 11 ausgetauscht werden muss. Auch werden abhängig vom zu schneidenden Werkstück bzw. vom jeweiligen Schneidprozess unterschiedliche Typen von Düsen benötigt.

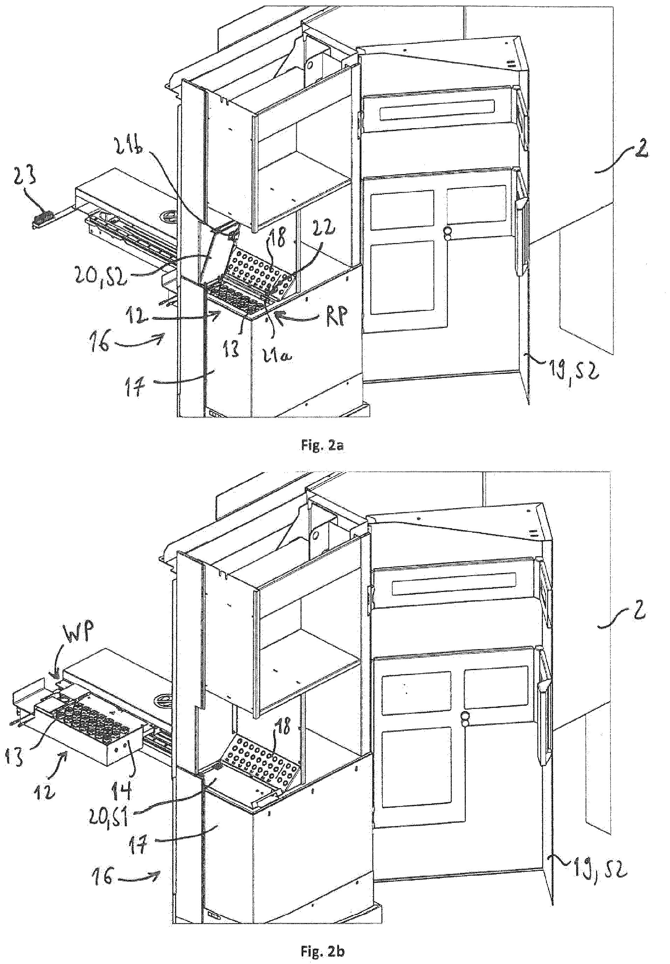

**Fig. 2a**,**b** zeigen jeweils ein Detail der Schutzumhausung 2 mit einem Düsenwechsler 12, der zur Montage und Demontage von Düsen 11 an dem Bearbeitungskopf 7 dient. Der Düsenwechsler 12 weist eine Mehrzahl von Düsenaufnahmen 13 auf, in der jeweils eine oder ggf. mehrere Düsen 11 abgelegt werden können, wie dies in der eingangs zitierten EP 2 589 458 B1 beschrieben ist. Die Düsenaufnahmen 13 sind in einem Grundkörper 14 bzw. einer Lagereinrichtung des Düsenwechslers 12 angeordnet und von der Oberseite des Grundkörpers 14 her für den Bearbeitungskopf 7 zugänglich.

Fig. 2a zeigt den Düsenwechsler 12 in einer Düsenwechselposition WP innerhalb der Schutzumhausung 2 und Fig. 2b in einer Rüstposition RP außerhalb der Schutzumhausung 2. Für die Steuerung der Bewegung des Düsenwechslers 12 zwischen der Düsenwechselposition WP und der Rüstposition RP weist die Laserbearbeitungsmaschine 1 eine Steuerungseinrichtung 15 auf (vgl. Fig. 1). Bei der im gezeigten Beispiel linearen Bewegung des Düsenwechslers 12 von der Düsenwechselposition WP in die Rüstposition RP und umgekehrt wird der Düsenwechsler 12 durch eine Öffnung in einer Laserschutzwand der Schutzumhausung 2 hindurch bewegt.

Wie in Fig. 2a zu erkennen ist, ist die Rüstposition RP in einem schrankartigen Maschinenteil 16 gebildet, welcher an der Schutzumhausung 2 an ihrer dem Umgebungsraum 9 zugewandten Seite angebracht ist. In dem schrankartigen Maschinenteil 16, welcher über die Laserschutzwand der Schutzumhausung 2 nach außen vorsteht, ist ein Kasten 17 angebracht, in dem der Düsenwechsler 12 in der Rüstposition RP aufgenommen ist. Der Düsenwechsler 12, genauer gesagt die Oberseite des Grundkörpers 14 mit den Düsenaufnahmen 13, ist in der Rüstposition RP von oben her zugänglich, so dass der Bediener 10 auf die Düsenaufnahmen 13 und die dort gelagerten Düsen 11 zugreifen kann. In dem schrankartigen Maschinenteil 16 ist auch ein Düsenmagazin 18 angeordnet, welches zur Lagerung von Düsen 11 dient, die vom Bediener 10 gegen die in den Düsenaufnahmen 13 abgelegten Düsen 11 des Düsenwechslers 12 ausgetauscht werden können. Das Düsenmagazin 18 ist benachbart zur Rüstposition RP angeordnet und schräg gegen die Horizontale verkippt, um zu verhindern, dass Staub von oben in dort gelagerte Düsen 11 fällt.

Wie in Fig. 2a ebenfalls zu erkennen ist, ist an der Schutzumhausung 2, genauer gesagt an deren der Arbeitsraumumgebung 9 zugewandter Seite, ein Verkleidungsbauteil 19 in der Art einer Schranktüre angebracht, welches zwischen einer in Fig. 2a,b gezeigten zweiten, geöffneten Stellung S2, in welcher der schrankartige Maschinenteil 16 und somit die Rüstposition RP von der Arbeitsraumumgebung 9 her zugänglich ist, in eine erste, nicht bildlich dargestellte geschlossene Stellung S1 bewegbar ist, in welcher die Rüstposition RP nicht von der Arbeitsraumumgebung 9 bzw. für einen dort befindlichen Bediener 10 zugänglich ist.

Wie in Fig. 2a,b ebenfalls zu erkennen ist, ist in dem schrankartigen Maschinenteil 16 eine Abdeckung 20 in der Art einer Klappe angebracht, die zwischen einer zweiten, in Fig. 2a gezeigten Stellung S2, in welcher die Rüstposition RP, genauer gesagt der Düsenwechsler 12, durch eine an der Oberseite des Kastens 17 gebildete Öffnung zugänglich ist, in eine in Fig. 2b gezeigte erste Stellung S1 bewegbar ist, in welcher die Öffnung in dem Kasten 17 durch die Abdeckung 20 abgedeckt wird, so dass die Rüstposition RP des Düsenwechslers 12 durch die Abdeckung 20 von der Arbeitsraumumgebung 9 getrennt ist.

Wie in Fig. 2b zu erkennen ist, weist die Laserbearbeitungsmaschine 1 eine Sensoreinrichtung in Form eines Kontaktschalters 21a, 21b auf, der aus einem ersten Schalterteil 21a und einem zweiten Schalterteil 21b besteht. Der erste Schalterteil 21a ist seitlich an der Öffnung in dem Kasten 17 angebracht, der zweite Schalterteil 21b ist an der Unterseite der Abdeckung 20 angebracht. Die beiden Schalterteile 21a, 21b liegen bei in der in Fig. 2a gezeigten geschlossenen Stellung S1 der Abdeckung 20 aneinander an und erzeugen einen beispielsweise mechanischen, elektrischen oder induktiven Kontakt, der von dem Kontaktschalter 21a, 21b erkannt und an die Steuerungseinrichtung 15 gemeldet wird. Die Steuerungseinrichtung 15 verhindert oder stoppt die Bewegung des Düsenwechslers 12 von der Rüstposition RP in die Düsenwechselposition WP und umgekehrt, sobald die erste Stellung S1 der Abdeckung 20 verlassen wird, d.h. bei insbesondere bei der in Fig. 2a gezeigten zweiten Stellung S2 der Abdeckung 20.

Bei dem in Fig. 2a,b gezeigten Beispiel weist die Laserbearbeitungsmaschine 1 eine Verriegelungseinrichtung 22 (vgl. Fig. 2a) zur Verriegelung der Abdeckung 20 in der ersten Stellung S1 auf, welche im gezeigten Beispiel benachbart zu dem ersten Schalterteil 21a angeordnet ist. Die Verriegelungseinrichtung 22 wird von der Steuerungseinrichtung 15 aktiviert, wenn der Düsenwechsler 12 sich nicht in der Rüstposition RP befindet. Die Verriegelungseinrichtung 22, welche einen (nicht gezeigten) mechanischen Riegel z.B. in der Art eines Stifts oder dergleichen aufweist, greift in eine entsprechende Öffnung in der Abdeckung 20 ein, so dass die Abdeckung 20 nicht durch den Bediener 10 angehoben werden kann, wenn die Verriegelungseinrichtung 22 aktiviert ist. Durch die Verriegelungseinrichtung 22 kann verhindert werden, dass der Bediener 10 während der Bewegung des Düsenwechslers 12 in die in dem Kasten 17 gebildete Öffnung eingreift und sich hierbei ggf. verletzt. An Stelle der in Fig. 2a,b gezeigten Abdeckung 20 in Form einer verschwenkbaren Klappe kann als Abdeckung 20 beispielsweise ein Schieber verwendet werden, der zwischen der ersten und zweiten Stellung S1, S2 verschiebbar ist.

Die Verriegelungseinrichtung 22 wird nicht unbedingt benötigt, wenn die Bewegung des Düsenwechslers12 bei Kontaktverlust des Kontaktschalters 21a, 21b automatisch verhindert bzw. gestoppt wird, sie erhöht aber zusätzlich die Sicherheit der Maschine 1. Alternativ kann die Verriegelungseinrichtung 22 auch rein mechanisch und ohne Ansteuerung durch die Steuerungseinrichtung 15 ausgeführt sein. Die Verriegelungseinrichtung 22 kann beispielsweise durch eine Feder vorgespannt sein, wobei diese Vorspannung durch die Kraft der Antriebsachse des Düsenwechslers 12 überwunden wird, wenn der Düsenwechsler 12 in der Rüstposition RP positioniert ist.

Anders als in Fig. 2a,b dargestellt ist, kann eine Verriegelungseinrichtung 22 in der Laserbearbeitungsmaschine 1 vorgesehen sein, welche das Verkleidungsbauteil 19 in der ersten Stellung S1 arretiert, so dass der schrankartige Maschinenteil 16 der Schutzumhausung 2 nicht für den Bediener 10 zugänglich ist, wenn der Düsenwechsler 12 sich nicht in der Rüstposition RP befindet. In diesem Fall kann ggf. auf die in Fig. 2a,b gezeigte Abdeckung 20 verzichtet werden.

In Fig. 2a ebenfalls zu erkennen ist ein Bürstenelement 23 (Bürstensegment), welches zur Reinigung einer an dem Laserbearbeitungskopf 7 angebrachten Düse 11 dient. Für die Reinigung wird der Laserbearbeitungskopf 7 mit der Düse 11 über das Bürstenelement 23 gefahren, um anhaftende Schlacke und Staub abzubürsten. Das Bürstenelement 23 ist benachbart zur Düsenwechselposition WP angebracht und wird zur Reinigung der Düse 11 typischer Weise nur dann verwendet, wenn der Düsenwechsler 12 sich in der Rüstposition RP befindet. Auf diese Weise kann der Düsenwechsler 12, insbesondere können die Düsenaufnahmen 13 sowie die Mechanik des Düsenwechslers 12, beispielsweise eine dort vorgesehene Kalibrierplatte, vor Verschmutzung geschützt werden.

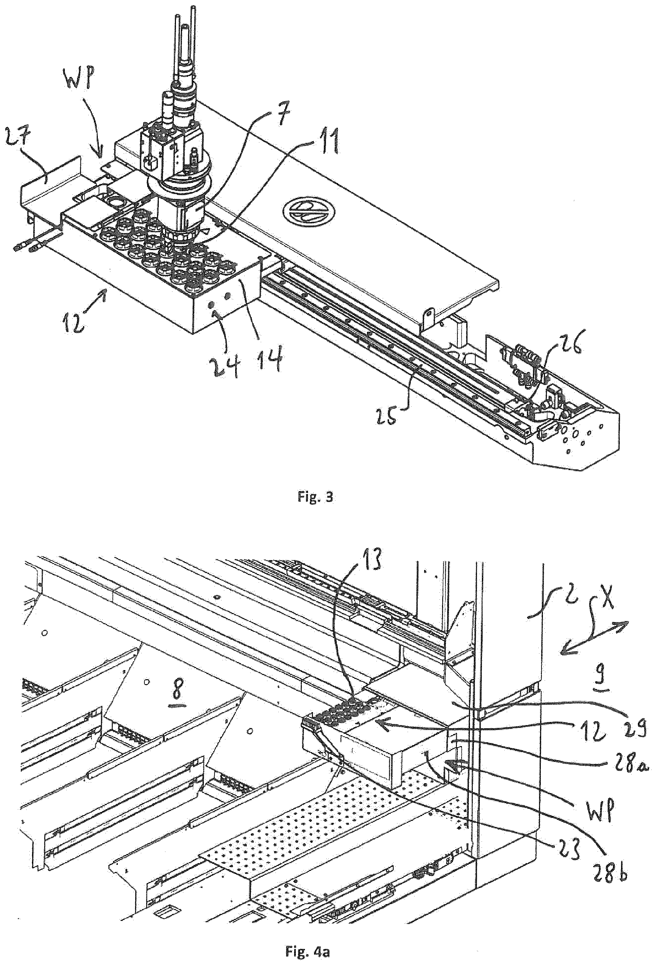

Fig. 3 zeigt den Düsenwechsler 12 in der Düsenwechselposition WP, in welcher der Laserbearbeitungskopf 7 über dem Grundkörper 14 des Düsenwechslers 12 positioniert ist, um eine an dem Laserbearbeitungskopf 7 angebrachte Düse 11 in einer Düsenaufnahme 13 abzulegen bzw. um die Düse 11 von dem Laserbearbeitungskopf 7 zu demontieren. Die Düse 11 ist im gezeigten Beispiel mit einem Gewinde versehen und kann mittels eines Drehantriebs 24, der in dem Grundkörper 14 unterhalb der Düsenaufnahmen 13 angebracht ist, in eine Rotationsbewegung um ihre Mittenachse versetzt werden, beispielsweise wie dies in der EP 2 589 458 B1 genauer beschrieben ist.

Zur Bewegung des Düsenwechslers 12 von der Düsenwechselposition WP in die Rüstposition RP und umgekehrt ist der Düsenwechsler 12 an einer Linearführung 25 gelagert und kann mittels eines Antriebs 26, der im gezeigten Beispiel in Form eines Pneumatikzylinders ausgebildet ist, entlang der Linearführung 25 verschoben werden. An Stelle eines Antriebs 26 in Form eines Pneumatikzylinders kann auch ein anderer Antrieb, beispielsweise ein gesteuerter Linearantrieb bzw. eine NC-Achse dienen, welche es ermöglicht, den Düsenwechsler 12 an beliebigen Stellen entlang der Linearführung 25 zu positionieren. In diesem Fall kann ggf. die Düsenwechselposition entlang der Linearführung 25 (geringfügig) variiert werden, um eine jeweils gewünschte Düsenaufnahme 13 unter dem Laserbearbeitungskopf 7 zu positionieren. Auf diese Weise muss der Laserbearbeitungskopf 7 ggf. nur genau eine Position entlang der Linearführung 25 anfahren, d.h. es ist nicht erforderlich, den Bearbeitungskopf 7 für den Düsenwechsel an unterschiedlichen Positionen entlang der Linearführung 25 zu bewegen. An Stelle einer Linearbewegung kann der Düsenwechsler 12 ggf. auch in einer Dreh- und/oder Schwenkbewegung von der Düsenwechselposition WP in die Rüstposition RP und umgekehrt bewegt werden.

Wie in Fig. 3 ebenfalls zu erkennen ist, weist der Düsenwechsler 12 ein Abschirmelement 27 in Form eines Abschirmblechs auf, das an einer Stirnseite des Düsenwechslers 12 angebracht ist und das bei der Bewegung des Düsenwechslers 12 von der Düsenwechselposition WP in die Rüstposition RP die zu diesem Zweck in der Schutzumhausung 2 gebildete Öffnung gegen Streustrahlung vom Prozessort abschirmt, d.h. den Weg der Streustrahlung zur Öffnung unterbricht, so dass nicht mehr als die zulässige Menge Streustrahlung von dem Arbeitsraum 8 in die Arbeitsraumumgebung 9 gelangen kann.

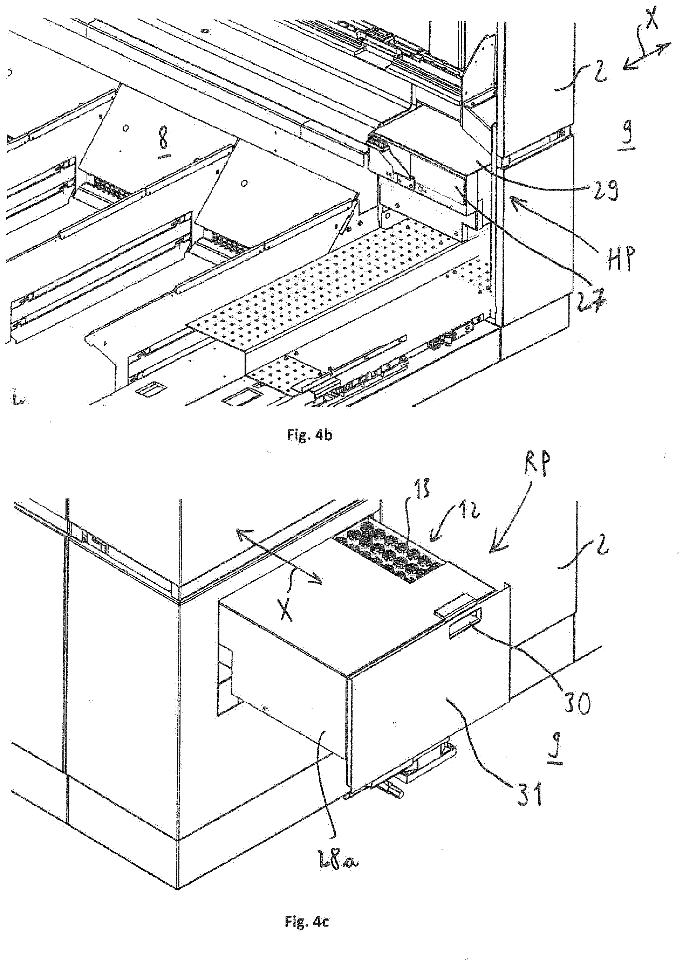

**Fig. 4a****-c** zeigen ein Detail einer Schutzumhausung 2 einer Laserbearbeitungsmaschine 1, die sich von der in Fig. 2a,b und Fig. 3 gezeigten Laserbearbeitungsmaschine 1 unterscheidet. In Fig. 4a,b wurde eine Seitenwand der Schutzumhausung 2 nicht bildlich dargestellt, um den hinter der Seitenwand befindlichen Düsenwechsler 12 sichtbar zu machen.

Der Düsenwechsler 12 befindet sich in Fig. 4a in der Düsenwechselposition WP, in Fig. 4b in einer Ruheposition HP innerhalb der Schutzumhausung 2 und in Fig. 4c in der Rüstposition RP außerhalb der Schutzumhausung 2. Wie bei dem in Fig. 2a,b gezeigten Beispiel kann der Düsenwechsler 12 zwischen der Düsenwechselposition WP und der Ruheposition HP mittels eines in Fig. 4a-c nicht dargestellten Antriebs automatisiert entlang einer Linearachse X verschoben werden. Der Düsenwechsler 12 ist hierbei in einem zweiten schubladenartigen Bauteil 28b aufgenommen, welches gemeinsam mit dem Düsenwechsler 12 entlang der Linearachse X bewegt wird. Wie in Fig. 4b zu erkennen ist, ist der Düsenwechsler 12 in der Ruheposition HP in einem Gehäuse 29 untergebracht, welches einen Gehäusedeckel aufweist, der den Düsenwechsler 12, genauer gesagt dessen Oberseite, an der die Düsenaufnahmen 13 angebracht sind, abdeckt und in der Ruheposition HP vor Staub und Schlacke aus dem Arbeitsraum 8 schützt. Der Düsenwechsler 12 bzw. das zweite schubladenförmige Bauteil 28b weist an seiner Stirnseite eine lösbare, mit dem Düsenwechsler 12 verbindbare und gemeinsam mit dem zweiten schubladenförmigen Bauteil 28b entlang der Linearachse X verfahrbare Frontfläche auf, welche als Abschirmelement 27 dient und welche sowohl bei in der Ruheposition HP als auch in der Rüstposition RP angeordnetem Düsenwechsler 12 das Gehäuse 29 so weit verschließt, dass der Strahlschutz gewährleistet ist und Streustrahlung nicht in unzulässiger Menge in die Arbeitsraumumgebung 9 gelangt. Das zweite schubladenförmige Bauteil 28b ist in der Ruheposition HP innerhalb des Gehäuses 29 in einem ersten schubladenförmigen Bauteil 28a aufgenommen, welches aus der Schutzumhausung 2 in die Rüstposition RP ausgezogen werden kann. Hierbei wird das Abschirmelement 27 von dem zweiten schubladenförmigen Bauteil 28b abgekoppelt und verbleibt in seiner das Gehäuse 29 verschließenden Position.

Wie in Fig. 4c zu erkennen ist, befindet sich der in dem ersten schubladenförmigen Bauteil 28a gelagerte Düsenwechsler 12 in der Rüstposition RP in einer aus der Schutzumhausung 2 ausgezogenen Stellung, so dass dieser von dem Bediener 10 in der Arbeitsraumumgebung 9 mit Düsen 11 bestückt werden kann. Der Düsenwechsler 12 kann von dem Bediener 10 manuell aus der Ruheposition HP in die Rüstposition RP und umgekehrt bewegt werden. Um dies zu ermöglichen, ist in dem ersten schubladenförmigen Bauteil 28a, genauer gesagt an einer Frontfläche 31 des schubladenförmigen Bauteils 28a, welche in der Ruheposition RP und in der Düsenwechselposition WP einen Teil der Außenwand der Schutzumhausung 2 bildet, ein Eingriff 30 für den Bediener 10 vorgesehen. Ein Herausziehen des schubladenförmigen Bauteils 28a aus der Schutzumhausung 2 ist nur möglich, wenn der Düsenwechsler 12 in dem ersten schubladenförmigen Bauteil 28a angeordnet ist, was, ebenso wie es für Fig. 2a,b beschrieben ist, mit Hilfe eines Kontaktschalters und/oder einer Verriegelung sichergestellt werden kann.

Wie in Fig. 4a,b ebenfalls zu erkennen ist, ist an der Frontfläche des Düsenwechslers 12, welche das Abschirmelement 27 bildet, ein Bürstenelement 23 angebracht, welches ebenso wie das Abschirmelement 27 mit dem Düsenwechsler 12 mitbewegt wird, wenn dieser von der Ruheposition HP in die Düsenwechselposition WP und umgekehrt bewegt wird. Wie bei dem in Fig. 2a,b gezeigten Beispiel dient das Bürstenelement 23 zur Reinigung einer an dem Bearbeitungskopf 7 angebrachten Düse 11, wenn der Düsenwechsler 12 sich in der Ruheposition RP befindet. Bei dem in Fig. 4a-c gezeigten Beispiel ist der Düsenwechsler 12 an der Ruheposition RP durch das Gehäuse 29 vor bei der Reinigung entstehender Schlacke und Staub geschützt.

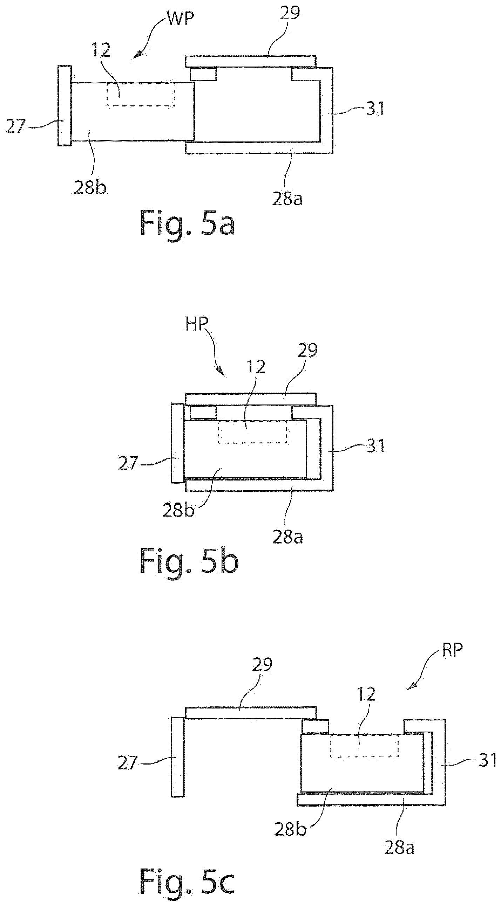

Die Anordnung der schubladenförmigen Bauteile 28a, 28b ist auch in **Fig. 5a****-c** gut zu erkennen, welche den Düsenwechsler 12 analog zu Fig. 4a-c schematisch in der Düsenwechselposition WP, in der Ruheposition HP sowie in der Rüstposition RP zeigen. Es versteht sich, dass die Anordnung der beiden schubladenförmigen Bauteile 28a, 28b in der Ruheposition HP auch umgekehrt gewählt werden kann, d.h. dass das erste schubladenförmige Bauteil 28a in dem zweiten schubladenförmigen Bauteil 28b aufgenommen bzw. in diesem angeordnet ist.

Bei den weiter oben beschriebenen Laserbearbeitungsmaschinen 1 kann durch die Bewegung des Düsenwechslers 12 in die für den Bediener 10 zugängliche Rüstposition RP außerhalb der Schutzumhausung 2 ein Vorrüsten von Düsen 11 erfolgen, indem die Düsenaufnahmen 13 geeignet bestückt werden, während in der Laserbearbeitungsmaschine 1 andere Prozesse, beispielsweise die Bearbeitung des Werkstücks 2 mittels des Laserstrahls 6 in dem Arbeitsraum 8 oder ein Wechsel des zu bearbeitenden Werkstücks 3, erfolgen.

## Patentansprüche

1. Laserbearbeitungsmaschine (1) zum Bearbeiten eines Werkstücks (3) mittels eines Laserstrahls (6), umfassend:
einen Düsenwechsler (12) zur Montage und/oder Demontage von Düsen (11) an einem Bearbeitungskopf (7) der Laserbearbeitungsmaschine (1), wobei der Düsenwechsler (12) eine Mehrzahl von Düsenaufnahmen (13) zur Aufnahme von Düsen (11) aufweist,
**dadurch gekennzeichnet,**
**dass** die Laserbearbeitungsmaschine (1) eine Schutzumhausung (2) zur Abgrenzung eines Arbeitsraums (8) für die Bearbeitung des Werkstücks (3) mit dem Laserstrahl (6) von einer Arbeitsraumumgebung (9) aufweist, sowie dass der Düsenwechsler (12) zwischen einer Düsenwechselposition (WP) innerhalb der Schutzumhausung (2) und einer Rüstposition (RP) außerhalb der Schutzumhausung (2) bewegbar ist.

2. Laserbearbeitungsmaschine nach Anspruch 1, bei welcher der Düsenwechsler (12) in der Schutzumhausung (2) zwischen der Düsenwechselposition (WP) und einer Ruheposition (HP) bewegbar ist, aus welcher der Düsenwechsler (12) in die Rüstposition (RP) bewegbar ist.

3. Laserbearbeitungsmaschine nach Anspruch 2, bei welcher der Düsenwechsler (12) aus der Ruheposition (HP) manuell in die Rüstposition (RP) bewegbar ist.

4. Laserbearbeitungsmaschine nach einem der Ansprüche 2 oder 3, weiter umfassend: ein Gehäuse (29) zur Abdeckung der Mehrzahl von Düsenaufnahmen (13) des Düsenwechslers (12) in der Ruheposition (HP).

5. Laserbearbeitungsmaschine nach einem der Ansprüche 2 bis 4, bei welcher der Düsenwechsler (12) in der Ruheposition (HP) und in der Rüstposition (RP) in einem ersten schubladenförmigen Bauteil (28a) aufgenommen ist, wobei das erste schubladenförmige Bauteil (28a) sich in der Rüstposition (RP) in einer aus der Schutzumhausung (2) ausgezogenen Stellung befindet.

6. Laserbearbeitungsmaschine nach Anspruch 5, bei welcher der Düsenwechsler (12) in der Düsenwechselposition (WP) in einem zweiten schubladenförmigen Bauteil (28b) aufgenommen ist, wobei das zweite schubladenförmige Bauteil (28b) in der Ruheposition (HP) in dem ersten schubladenförmigen Bauteil (28a) angeordnet ist, oder umgekehrt.

7. Laserbearbeitungsmaschine nach einem der vorhergehenden Ansprüche, weiter umfassend: ein an der der Arbeitsraumumgebung (9) zugewandten Seite der Schutzumhausung (2) angebrachtes Verkleidungsbauteil (19) und/oder eine Abdeckung (20), welches bzw. welche zwischen einer ersten Stellung (S1) und einer zweiten Stellung (S2) bewegbar ist, wobei in der ersten Stellung (S1) das Verkleidungsbauteil (19) und/oder die Abdeckung (20) die Rüstposition (RP) von der Arbeitsraumumgebung (9) trennt und in der zweiten Stellung (S2) die Rüstposition (RP) von der Arbeitsraumumgebung (9) zugänglich ist.

8. Laserbearbeitungsmaschine nach Anspruch 7, weiter umfassend: eine Sensoreinrichtung (21a, 21b) zur Erkennung der ersten und/oder der zweiten Stellung (S1, S2) des Verkleidungsbauteils (19) und/oder der Abdeckung (20).

9. Laserbearbeitungsmaschine nach Anspruch 7 oder 8, welche ausgebildet ist, die Bewegung des Düsenwechslers (12) von der Düsenwechselposition (WP) in die Rüstposition (RP) und umgekehrt zu verhindern, wenn das Verkleidungsbauteil (19) und/oder die Abdeckung (20) sich in der zweiten Stellung (S2) befinden.

10. Laserbearbeitungsmaschine nach einem der Ansprüche 7 bis 9, weiter umfassend: eine Verriegelungseinrichtung (22) zur Verriegelung des Verkleidungsbauteils (19) und/oder der Abdeckung (20) in der ersten Stellung (S1), wenn der Düsenwechsler (12) nicht in der Rüstposition (RP) angeordnet ist.

11. Laserbearbeitungsmaschine nach einem der vorhergehenden Ansprüche, weiter umfassend: ein Düsenmagazin (18) zur Ablage von Düsen (11), welches benachbart zu dem in der Rüstposition (RP) befindlichen Düsenwechsler (12) angeordnet ist.

12. Laserbearbeitungsmaschine nach einem der vorhergehenden Ansprüche, bei welcher der Düsenwechsler (12) mindestens ein Abschirmelement (27) zur Verhinderung des Austritts von Laserstrahlung aus dem Arbeitsraum (8) in die Arbeitsraumumgebung (9) aufweist oder lösbar mit dem Abschirmelement (27) verbunden ist.

13. Laserbearbeitungsmaschine nach einem der vorhergehenden Ansprüche, weiter umfassend: einen Antrieb (26) zur Bewegung des Düsenwechslers (12) aus der Düsenwechselposition (WP) in die Ruheposition (HP) oder aus der Düsenwechselposition (WP) in die Rüstposition (RP), und umgekehrt.

14. Laserbearbeitungsmaschine nach einem der vorhergehenden Ansprüche, weiter umfassend: ein ortsfest in dem Arbeitsraum (8) oder am Abschirmelement (27) angeordnetes Bürstenelement (23) zur Reinigung einer an dem Bearbeitungskopf (7) montierten Düse (11) bei in der Ruheposition (HP) oder in der Rüstposition (RP) angeordnetem Düsenwechsler (12).

15. Laserbearbeitungsmaschine nach einem der vorhergehenden Ansprüche, weiter umfassend: einen Drehantrieb (24) zum Erzeugen einer Drehbewegung mindestens einer Düsenaufnahme (13) zur Montage und/oder Demontage einer in der Düsenaufnahme (13) aufgenommenen Düse (11) an dem Bearbeitungskopf (7) in der Düsenwechselposition (WP) des Düsenwechslers (12).

## Claims

1. A laser processing machine (1) for processing a workpiece (3) by means of a laser beam (6), comprising:
a nozzle changer (12) for mounting and/or demounting nozzles (11) to/from a processing head (7) of the laser processing machine (1), the nozzle changer (12) having a plurality of nozzle holders (13) for holding nozzles (11),
**characterized**
**in that** the laser processing machine (1) has a protective enclosure (2) for closing off a working space (8) for the processing of the workpiece (3) with the laser beam (6) from a working space surrounding area (9), and
**in that** the nozzle changer (12) is movable between a nozzle changing position (WP) within the protective enclosure (2) and a setup position (RP) outside the protective enclosure (2).

2. The laser processing machine as claimed in claim 1, in which the nozzle changer (12) is movable in the protective enclosure (2) between the nozzle changing position (WP) and a rest position (HP), from which the nozzle changer (12) can be moved into the setup position (RP).

3. The laser processing machine as claimed in claim 2, in which the nozzle changer (12) is manually movable from the rest position (HP) into the setup position (RP).

4. The laser processing machine as claimed in either of claims 2 and 3, further comprising: a housing (29) for covering the plurality of nozzle holders (13) of the nozzle changer (12) in the rest position (HP).

5. The laser processing machine as claimed in one of claims 2 to 4, in which in the rest position (HP) and in the setup position (RP) the nozzle changer (12) is accommodated in a first drawer-like component (28a), the first drawer-like component (28a) being pulled out from the protective enclosure (2) in the setup position (RP).

6. The laser processing machine as claimed in claim 5, in which in the nozzle changing position (WP) the nozzle changer (12) is accommodated in a second drawer-like component (28b), the second drawer-like component (28b) being arranged within the first drawer-like component (28a) in the rest position (HP), or vice versa.

7. The laser processing machine as claimed in one of the preceding claims, further comprising: a casing component (19) provided on the side of the protective enclosure (2) that is facing the working space surrounding area (9) and/or a cover (20), which is movable between a first position (S1) and a second position (S2), wherein in the first position (S1), the casing component (19) and/or the cover (20) separates the setup position (RP) from the working space surrounding area (9) and in the second position (S2) the setup position (RP) is accessible from the working space surrounding area (9).

8. The laser processing machine as claimed in claim 7, further comprising: a sensor device (21a, 21b) for detecting the first and/or second position (S1, S2) of the casing component (19) and/or of the cover (20).

9. The laser processing machine as claimed in claim 7 or 8, wherein the movement of the nozzle changer (12) from the nozzle changing position (WP) into the setup position (RP) and vice versa is prevented when the casing component (19) and/or the cover (20) is in the second position (S2).

10. The laser processing machine as claimed in one of claims 7 to 9, further comprising: a locking device (22) for locking the casing component (19) and/or the cover (20) in the first position (S1) when the nozzle changer (12) is not located in the setup position (RP).

11. The laser processing machine as claimed in one of the preceding claims, further comprising: a nozzle magazine (18) for depositing nozzles (11), which is arranged adjacent to the nozzle changer (12) located in the setup position (RP).

12. The laser processing machine as claimed in one of the preceding claims, wherein the nozzle changer (12) has at least one shielding element (27) for preventing laser radiation from exiting the working space (8) into the working space surrounding area (9) or wherein the nozzle changer (12) is releasably connected to the shielding element (27).

13. The laser processing machine as claimed in one of the preceding claims, further comprising: a drive (26) for moving the nozzle changer (12) out of the nozzle changing position (WP) into the rest position (HP) or out of the nozzle changing position (WP) into the setup position (RP), and vice versa.

14. The laser processing machine as claimed in one of the preceding claims, further comprising: a brush element (23), fixedly arranged in the working space (8) or on the shielding element (27), for cleaning a nozzle (11) mounted on the processing head (7) when the nozzle changer (12) is arranged in the rest position (HP) or in the setup position (RP).

15. The laser processing machine as claimed in one of the preceding claims, further comprising: a rotary drive (24) for producing a rotary movement of at least one nozzle holder (13) for mounting and/or dismounting a nozzle (11) being held in the nozzle holder (13) to/from the processing head (7) in the nozzle changing position (WP) of the nozzle changer (12).

## Revendications

1. Machine (1) d'usinage au laser, conçue pour usiner une pièce (3) au moyen d'un faisceau laser (6) et comprenant :
un changeur (12) dévolu au montage et/ou au démontage de buses (11) au niveau d'une tête d'usinage (7) de ladite machine (1) d'usinage au laser, lequel changeur (12) de buses comporte une pluralité de logements (13) destinés à recevoir des buses (11),
**caractérisée par le fait**
**que** ladite machine (1) d'usinage au laser est munie d'un coffrage protecteur (2) conçu pour délimiter un espace de travail (8), affecté à l'usinage de la pièce (3) à l'aide du faisceau laser (6), par rapport à un espace (9) environnant ledit espace de travail ; et par le fait
**que** le changeur (12) de buses est mobile entre une zone (WP) de remplacement des buses, à l'intérieur du coffrage protecteur (2), et une zone d'équipement (RP) à l'extérieur dudit coffrage protecteur (2).

2. Machine d'usinage au laser selon la revendication 1, dans laquelle le changeur (12) de buses est mobile, dans le coffrage protecteur (2), entre la zone (WP) de remplacement des buses et une zone de repos (HP) à partir de laquelle ledit changeur (12) de buses peut être mû vers la zone d'équipement (RP).

3. Machine d'usinage au laser selon la revendication 2, dans laquelle le changeur (12) de buses peut être mû manuellement vers la zone d'équipement (RP) à partir de la zone de repos (HP).

4. Machine d'usinage au laser selon l'une des revendications 2 ou 3, comprenant en outre : un boîtier (29) destiné à recouvrir la pluralité de logements (13) de buses du changeur (12) de buses dans la zone de repos (HP).

5. Machine d'usinage au laser selon l'une des revendications 2 à 4, dans laquelle le changeur (12) de buses est logé dans une première pièce structurelle (28a) en forme de tiroir, dans la zone de repos (HP) et dans la zone d'équipement (RP), ladite première pièce structurelle (28a), en forme de tiroir, occupant une position extraite du coffrage protecteur (2) dans ladite zone d'équipement (RP).

6. Machine d'usinage au laser selon la revendication 5, dans laquelle le changeur (12) de buses est logé dans une seconde pièce structurelle (28b) en forme de tiroir, dans la zone (WP) de remplacement des buses, sachant que, dans la zone de repos (HP), ladite seconde pièce structurelle (28b) en forme de tiroir est intégrée dans la première pièce structurelle (28a) en forme de tiroir, ou inversement.

7. Machine d'usinage au laser selon l'une des revendications précédentes, comprenant en outre : une pièce structurelle d'habillage (19) et/ou un capot (20) qui est implanté(e) du côté du coffrage protecteur (2) tourné vers l'espace (9) environnant l'espace de travail, et peut être déplacé(e) entre une première position (S1) et une seconde position (S2), sachant que, dans la première position (S1), ladite pièce structurelle d'habillage (19) et/ou ledit capot (20) sépare(nt) la zone d'équipement (RP) d'avec ledit espace (9) environnant l'espace de travail et que, dans la seconde position (S2), ladite zone d'équipement (RP) est accessible depuis ledit espace (9) environnant l'espace de travail.

8. Machine d'usinage au laser selon la revendication 7, comprenant en outre : un dispositif de détection (21a, 21b), affecté à l'identification de la (des) première et/ou seconde position(s) (S1, S2) de la pièce structurelle d'habillage (19) et/ou du capot (20).

9. Machine d'usinage au laser selon la revendication 7 ou 8, réalisée en vue d'empêcher le mouvement du changeur (12) de buses, de la zone (WP) de remplacement des buses à la zone d'équipement (RP), et inversement, lorsque la pièce structurelle d'habillage (19) et/le capot (20) occupe(nt) la seconde position (S2).

10. Machine d'usinage au laser selon l'une des revendications 7 à 9, comprenant en outre : un dispositif de verrouillage (22) conçu pour verrouiller la pièce structurelle d'habillage (19) et/le capot (20), dans la première position (S1), lorsque le changeur (12) de buses ne se trouve pas dans la zone d'équipement (RP).

11. Machine d'usinage au laser selon l'une des revendications précédentes, comprenant en outre : un magasin (18) dévolu au remisage de buses (11), implanté au voisinage du changeur (12) de buses situé dans la zone d'équipement (RP).

12. Machine d'usinage au laser selon l'une des revendications précédentes, dans laquelle le changeur (12) de buses est pourvu d'au moins un élément de blindage (27) conçu pour prévenir la sortie d'un rayonnement laser vers l'espace (9) environnant l'espace de travail, à partir dudit espace de travail (8), ou est relié amoviblement audit élément de blindage (27).

13. Machine d'usinage au laser selon l'une des revendications précédentes, comprenant en outre : un entraînement (26) affecté à la mise en mouvement du changeur (12) de buses vers la zone de repos (HP) à partir de la zone (WP) de remplacement des buses, ou vers la zone d'équipement (RP) à partir de ladite zone (WP) de remplacement des buses, et inversement.

14. Machine d'usinage au laser selon l'une des revendications précédentes, comprenant en outre : un élément de brossage (23), implanté de manière fixe dans l'espace de travail (8) ou sur l'élément de blindage (27) et dévolu au nettoyage d'une buse (11), montée sur la tête d'usinage (7), lorsque le changeur (12) de buses se trouve dans la zone de repos (HP) ou dans la zone d'équipement (RP).

15. Machine d'usinage au laser selon l'une des revendications précédentes, comprenant en outre : un entraînement (24) en rotation, destiné à engendrer un mouvement rotatoire d'au moins un logement (13) de buse, en vue du montage et/ou du démontage d'une buse (11) reçue par ledit logement (13), au niveau de la tête d'usinage (7), dans la zone (WP) de remplacement des buses du changeur (12) de buses.
